Europäisches Patentamt

European Patent Office

Office européen des brevets

(11) Numéro de publication : **0 485 287 A1**

(12) **DEMANDE DE BREVET EUROPEEN**

(21) Numéro de dépôt : **91402975.6**

(22) Date de dépôt : **06.11.91**

(51) Int. Cl.⁵ : **B62D 1/18**

(30) Priorité : **09.11.90 FR 9013930**

(43) Date de publication de la demande :
**13.05.92 Bulletin 92/20**

(84) Etats contractants désignés :
**AT BE CH DE DK ES FR GB GR IT LI LU NL SE**

(71) Demandeur : **ECIA - EQUIPEMENTS ET COMPOSANTS POUR L'INDUSTRIE AUTOMOBILE**
**F-25400 Audincourt (Doubs) (FR)**

(72) Inventeur : **Hoblingre, André**
**Rue Jacques Offenbach**
**F-25700 Valentigney (FR)**

(74) Mandataire : **Habasque, Etienne Joel Jean-François et al**
**Cabinet Lavoix 2, Place d'Estienne d'Orves**
**F-75441 Paris Cédex 09 (FR)**

(54) **Dispositif de blocage en position d'une colonne de direction réglable de véhicule automobile.**

㉗ Ce dispositif de blocage en position d'une colonne de direction réglable de véhicule automobile, du type comportant une structure de support de colonne reliée au reste de la structure du véhicule et comportant deux flasques entre lesquels est disposée la colonne et des moyens de blocage de la colonne en position par rapprochement des flasques, comprenant un tirant (10) s'étendant entre les flasques, dont la première extrémité (11) est en appui sur l'un des flasques et la seconde est reliée à des moyens de blocage à excentrique (12) munis d'au moins une came excentrée (13, 17) reliée à un levier de manoeuvre (14) et à la seconde extrémité (15) du tirant (10) et en appui sur l'autre flasque de la structure pour permettre le rapprochement de ces flasques et bloquer la colonne en position, est caractérisé en ce que ladite au moins une came excentrée (13, 17) comporte une âme centrale (13a, 17a) autour de laquelle est montée rotative une bague de roulement (13b, 17 b) en appui sur le flasque correspondant.

FIG.2

EP 0 485 287 A1

La présente invention concerne un dispositif de blocage en position d'une colonne de direction réglable de véhicule automobile.

Plus particulièrement, la présente invention se rapporte à un tel dispositif de blocage du type comportant une structure de support de colonne reliée au reste de la structure du véhicule et comprenant deux flasques entre lesquels est disposée la colonne et des moyens de blocage de la colonne en position par rapprochement des flasques, comprenant un tirant s'étendant entre les flasques, dont la première extrémité est en appui sur l'un des flasques et la seconde est reliée à des moyens de blocage à excentrique munis d'au moins une came excentrée reliée à un levier de manoeuvre et à la seconde extrémité du tirant et en appui sur l'autre flasque de la structure de support pour permettre le rapprochement de ces flasques et bloquer la colonne en position.

Une telle structure est bien connue dans l'état de la technique et est décrite par exemple dans le document FR-A-2.360.454 et plus particulièrement en regard des figures 1 et 4 de ce document.

Cependant, tous les moyens de blocage à excentrique connus dans l'état de la technique présentent un certain nombre d'inconvénients dans la mesure où ils sont relativement difficiles à manoeuvrer.

En effet, les cames excentrées de ces moyens de blocage à excentrique viennent en appui directement sur une surface correspondante de l'un des flasques de la structure de support pour permettre le rapprochement de ceux-ci et bloquer la colonne en position. On conçoit que plus le serrage à obtenir est important plus la manoeuvre et le déplacement de cette came excentrée sont difficiles.

Le but de l'invention est donc de résoudre ces problèmes en proposant un dispositif de blocage en position d'une colonne réglable de véhicule automobile, qui soit simple, fiable et qui puisse être manoeuvré facilement.

A cet effet, l'invention a pour objet un dispositif de blocage du type tel que décrit précédemment, caractérisé en ce que ladite au moins une came excentrée comporte une âme centrale autour de laquelle est montée rotative une bague de roulement en appui sur le flasque correspondant.

Avantageusement, les moyens de blocage comprennent deux cames disposées symétriquement de part et d'autre du tirant.

Selon un mode de réalisation l'âme centrale de la ou de chaque came comporte une partie en saillie d'entraînement par coopération de forme adaptée pour coopérer avec un évidement de forme complémentaire du levier et le levier comporte deux branches munies chacune d'un évidement d'entraînement d'une came correspondante.

L'invention sera mieux comprise à l'aide de la description qui va suivre donnée uniquement à titre d'exemple et faite en se référant aux dessins annexés sur lesquels :

– La Fig.1 représente une vue en coupe d'un dispositif de blocage d'une colonne de direction réglable de véhicule automobile, de l'état de la technique ;

– La Fig.2 représente une vue en perspective éclatée de moyens de blocage à excentrique entrant dans la constitution d'un dispositif de blocage selon l'invention ; et

– La Fig.3 représente une vue en coupe d'une partie du dispositif de blocage selon l'invention, illustrant le fonctionnement des moyens de blocage à excentrique.

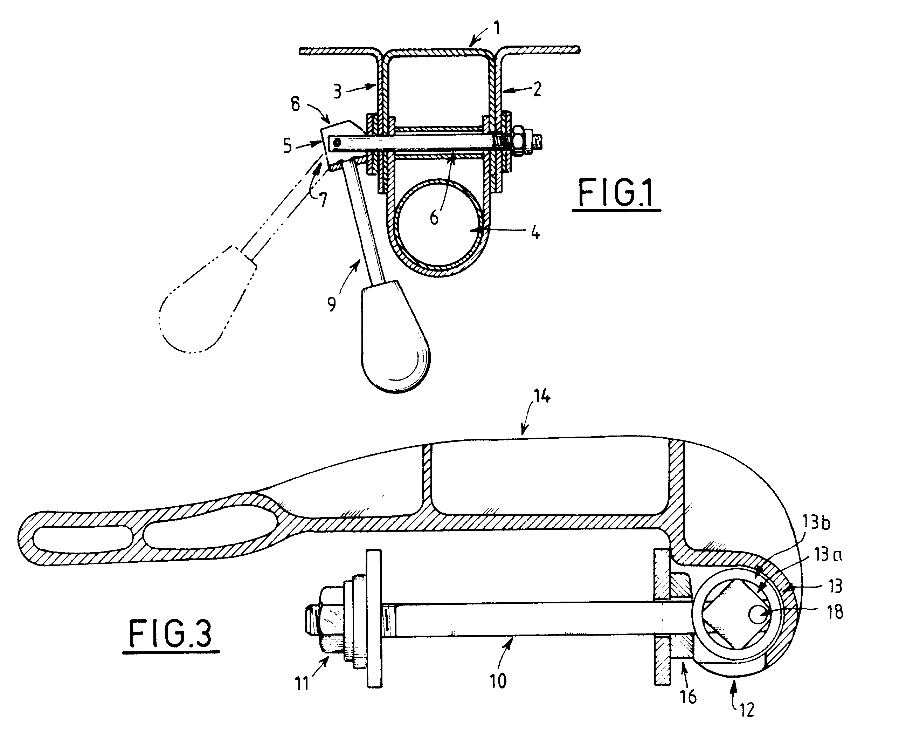

Ainsi qu'on peut le voir sur la Fig.1, un dispositif de blocage en position d'une colonne de direction réglable de véhicule automobile, comporte de manière générale une structure de support de colonne désignée par la référence générale 1 sur cette figure, reliée au reste de la structure du véhicule et comportant deux flasques 2 et 3 entre lesquels est disposée la colonne de direction 4. Ce dispositif de blocage comporte également des moyens 5 de blocage de la colonne en position par rapprochement des flasques, ces moyens de blocage comprenant un tirant 6 s'étendant entre les flasques et dont la première extrémité est en appui sur l'un des flasques et la seconde est reliée à des moyens 7 de blocage à excentrique munis d'au moins une came excentrée 8 reliée à un levier de manoeuvre 9 et à la seconde extrémité du tirant 6 et en appui sur l'autre flasque de la structure, pour permettre le rapprochement de ces flasques et bloquer la colonne en position.

Pour une description plus détaillée de ce type de dispositifs de blocage, on se reportera au document français précité.

Ainsi qu'on l'a mentionné précédemment, ces dispositifs présentent un certain nombre d'inconvénients au niveau de la manoeuvre de la came excentrée.

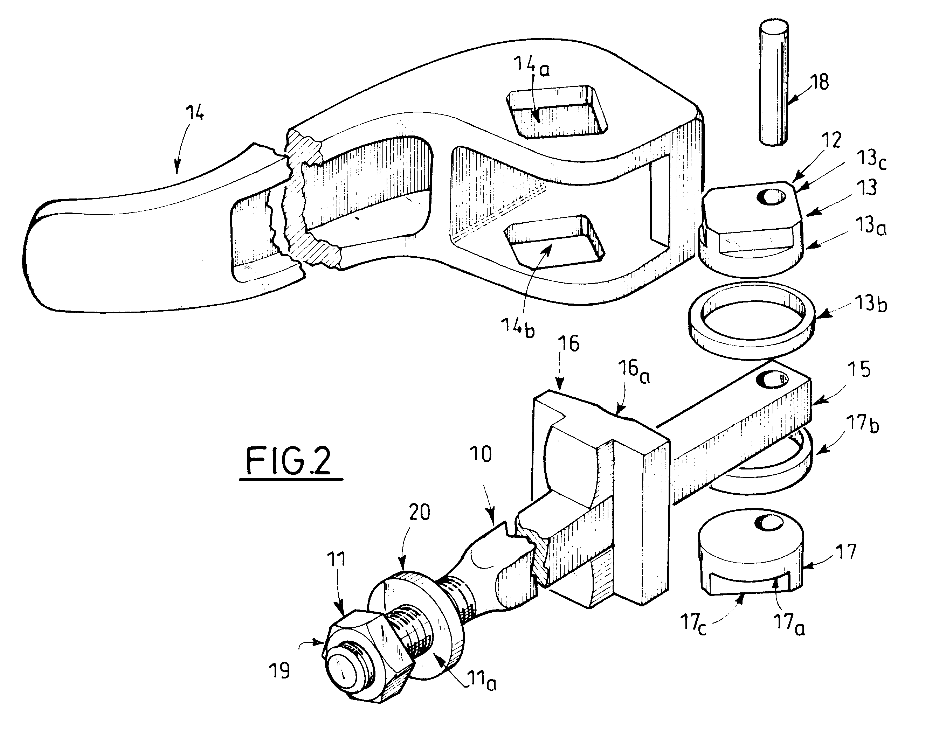

Le but de l'invention est de résoudre ces problèmes en proposant un dispositif représenté sur les Fig.2 et 3. On notera tout d'abord que le dispositif de blocage en position de la colonne de direction d'un véhicule automobile, selon l'invention, est un dispositif analogue à celui décrit en regard de la Fig.1, c'est-à-dire qu'il comporte une structure de support de colonne reliée au reste de la structure du véhicule et munie de deux flasques entre lesquels est disposée la colonne.

Le dispositif de blocage selon l'invention comporte également des moyens de blocage de la colonne en position par rapprochement des flasques, ces moyens de blocage comprenant par exemple un tirant 10 s'étendant entre les flasques, dont la première extrémité 11 est en appui sur l'un des flasques et la seconde est reliée à des moyens 12 de blocage à excentrique munis d'au moins une came excentrée 13 reliée à un levier de manoeuvre 14 et à la seconde extrémité 15 du tirant et en appui sur l'autre flasque de la structure de support pour permettre le rapprochement de ces flasques et bloquer la colonne en position. Ainsi que cela est représenté, un organe d'appui intermédiaire 16 peut être interposé entre la came excentrée des moyens de blocage et l'autre flasque de la structure de support.

Dans le mode de réalisation représenté sur ces figures, les moyens de blocage comprennent deux cames excentrées 13 et 17 disposées symétriquement de part et d'autre du tirant et plus particulièrement de la seconde extrémité 15 de celui-ci. Ces cames excentrées comportent en fait une âme centrale respectivement 13a et 17a autour de laquelle est montée rotative une bague de roulement respectivement 13b et 17b, adaptée pour s'appuyer sur le flasque correspondant de la structure de support, par exemple par l'intermédiaire de l'organe d'appui intermédiaire 16. On conçoit que le déplacement des cames par rapport au reste de la structure des moyens de blocage et en particulier des flasques, est plus facile que dans les dispositifs de l'état de la technique, dans la mesure où cette bague de roulement facilite le déplacement en translation et en rotation des différents organes entrant dans la constitution de ces moyens de blocage les uns par rapport aux autres.

On notera également que ces cames 13 et 17 de même que l'extrémité 15 du tirant comportent chacune un trou de passage d'une tige de liaison 18 traversant les âmes centrales des cames et l'extrémité correspondante du tirant pour relier ces différents organes.

Bien que dans le mode de réalisation représenté les moyens de blocage entrant dans la constitution du dispositif de blocage selon l'invention comprennent deux cames disposées de part et d'autre de l'extrémité correspondante du tirant, il va de soi que ces moyens peuvent ne comporter qu'une seule came.

On notera également que l'âme centrale de la ou de chaque came comporte une partie en saillie, respectivement 13c et 17c, d'entraînement par coopération de forme adaptée pour coopérer avec un évidement de forme complémentaire 14a, 14b du levier 14, ce levier comportant deux branches s'étendant de part et d'autre de l'extrémité correspondante 15 du tirant et étant munies chacune d'un évidement d'entraînement d'une came correspondante pour permettre à un utilisateur, par manoeuvre de ce levier 14, de déplacer les cames vers une position active de rapprochement des flasques de la structure de support pour bloquer la colonne de direction en position.

On notera également que l'organe d'appui intermédiaire 16 interposé entre la ou chaque came et le flasque correspondant de la structure de support comprend un évidement 16a de réception de la ou de chaque came et délimitant une position de blocage. En effet, lors du déplacement du levier pour l'amener dans la position de blocage de la colonne de direction en position, les cames et plus particulièrement les bagues de roulement 13b et 17b de celles-ci s'appuient et se déplacent sur cet organe d'appui intermédiaire 16 pour rapprocher les flasques l'un de l'autre. Lorsque ces bagues de roulement pénètrent dans l'évidement 16a de l'organe d'appui intermédiaire, l'utilisateur perçoit une discontinuité d'effort lui indiquant que le levier et les moyens de blocage sont en position de blocage stable.

Enfin, on notera que la première extrémité 11 du tirant 10 comporte une portion filetée 11a sur laquelle est disposé un écrou 19 associé, par exemple, à une rondelle 20 d'appui sur le flasque correspondant de la structure de support, cet écrou permettant de régler l'effort exercé sur les flasques pour bloquer la colonne en position.

## Revendications

1.- Dispositif de blocage en position d'une colonne de direction réglable de véhicule automobile, du type comportant une structure de support de colonne reliée au reste de la structure du véhicule et comportant deux flasques (2, 3) entre lesquels est disposée la colonne (4) et des moyens (5) de blocage de la colonne en position par rapprochement des flasques, comprenant un tirant (10) s'étendant entre les flasques, dont la première extrémité (11) est en appui sur l'un des flasques et la seconde est reliée à des moyens de blocage à excentrique (12) munis d'au moins une came excentrée (13, 17) reliée à un levier de manoeuvre (14) et à la seconde extrémité (15) du tirant (10) et en appui sur l'autre flasque de la structure pour permettre le rapprochement de ces flasques et bloquer la colonne en position, caractérisé en ce que ladite au moins une came excentrée (13, 17) comporte une âme centrale (13a, 17a) autour de laquelle est montée rotative une bague de roulement (13b, 17 b) en appui sur le flasque correspondant.

2.- Dispositif de blocage selon la revendication 1, caractérisé en ce que les moyens de blocage comprennent deux cames (13, 17) disposées symétriquement de part et d'autre du tirant (10).

3.- Dispositif de blocage selon l'une des revendications 1 ou 2, caractérisé en ce que la ou chaque câme (13, 17) est reliée à l'extrémité du tirant (10) par l'intermédiaire d'une tige de liaison (18).

4.- Dispositif de blocage selon l'une quelconque des revendications précédentes, caractérisé en ce que l'âme centrale (13a, 17a) de la ou chaque came comporte une partie en saillie (13c, 17c) d'entraînement par coopération de forme adaptée pour coopérer avec un évidement (14a, 14b) de forme complémentaire du levier (14).

5.- Dispositif de blocage selon les revendications 2 et 4, caractérisé en ce que le levier (14) comporte deux branches munies chacune d'un évidement (14a, 14b) d'entraînement d'une came correspondante.

6.- Dispositif de blocage selon l'une quelconque des revendications précédentes, caractérisé en ce qu'un organe d'appui intermédiaire (16) est interposé entre la ou chaque came et le flasque correspondant de la structure de support et en ce que cet organe d'appui comprend un évidement (16a) de réception de la ou chaque came (13, 17), délimitant une position de blocage.

7.- Dispositif de blocage selon l'une quelconque des revendications précédentes, caractérisé en ce que la seconde extrémité (11) du tirant (10) comprend une portion filetée (11a) sur laquelle est disposé un écrou (19) d'appui sur le flasque correspondant.

EP 0 485 287 A1

FIG.1

FIG.3

5

FIG.2

EP 0 485 287 A1

Office européen
des brevets

## RAPPORT DE RECHERCHE EUROPEENNE

Numero de la demande

EP    91 40 2975

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | GB-A-1 523 638 (TOYOTA) <br> * page 2, ligne 74 - page 3, ligne 120; figures 4-9 * <br> --- | 1-3 | B62D1/18 |
| A | FR-A-2 583 366 (RENAULT) <br> * page 4, ligne 16 - ligne 28; revendications; figures * <br><br> ----- | 1-3 | |

**DOMAINES TECHNIQUES RECHERCHES (Int. Cl.5)**

B62D
F16B

Le présent rapport a été établi pour toutes les revendications

| Lieu de la recherche | Date d'achèvement de la recherche | Examinateur |
|---|---|---|
| LA HAYE | 12 FEVRIER 1992 | PIRIOU |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
 
& : membre de la même famille, document correspondant

EPO FORM 1503 03.82 (P0402)